# EUROPEAN PATENT SPECIFICATION

(11) **EP 1 206 321 B1**
(45) Date of publication and mention of the grant of the patent: **04.08.2004**
(21) Application number: 00953324.1
(22) Date of filing: 15.08.2000
(51) Int. Cl.: B01L 3/02, A61M 5/31

(54) **FLEXIBLE PIPETTE STRIP AND METHOD OF ITS USE**
FLEXIBLER PIPETTEN-STREIFEN UND ZUGEHÖRIGES ANWENDUNGSVERFAHREN
BANDE SOUPLE POUR PIPETTE ET SON PROCEDE D'UTILISATION

(30) Priority: 17.08.1999 EP 99306463
(43) Date of publication of application: 22.05.2002
(73) Proprietor: THE TECHNOLOGY PARTNERSHIP PUBLIC LIMITED COMPANY, Melbourn, Royston, Hertfordshire SG8 6EE (GB)
(72) Inventor: CASSELLS, John, The Technology Partnership plc, Melbourne, Royston, Herts SG8 6EE (GB); EDWARDS, Thomas, Richard, Kerby, Hauxton, Cambridge CB2 5HZ (GB); WITHERS, Michael, John, Cambridge CB4 9PF (GB); LONG, James, Cambridge CB1 6LT (GB)
(74) Representative: Hallybone, Huw George
(86) International application number: PCT/GB2000/003145
(87) International publication number: WO 2001/012330

(56) References cited:
- EP-A- 0 226 867
- WO-A-99/34214
- DE-A- 19 843 691
- GB-A- 2 249 172

## Description

This invention relates to a system for manual and automated substance handling.

Single and multi-channel handling systems are widely used in drug discovery, medicine, biotechnology and chemistry. Both disposable and non-disposable pipettes are used, and these may be hand-held, mounted on a robot or integrated into a machine. Many such systems use pipettes.

Examples of pipetting systems using disposable pipette tips include hand-held single or multiple pipettors such as those manufactured by Eppendorf (Hamburg, Germany) and Gilson (Paris, France) and robot-mounted multiple pipettors such as those manufactured by Beckman Coulter Inc, (Fullerton, California, USA). Disposable pipettes give the advantage that they eliminate cross-contamination from sample to sample and can also protect the user from the danger of coming into contact with infectious or hazardous substances. Whether in manual use or machine, systems using disposable pipettes have to dispose of used tips and pick up new ones. With manual systems, a user may put individual tips onto the pipette by hand, but commonly fresh pipettes are picked up from a rack of tips. Pipettors are commonly used to load samples into microtitre plates and the tip rack is chosen to match the pitch and layout of standard plates. Thus, tips may be arrayed in racks of 96 or 384 to match 96-well or 384-well plates.

With a manual pipettor, the user has to move the pipettor to a tip rack to pick up pipette tips. When the pipette has been used, the operator then ejects the tip, usually into a waste container. This process has several disadvantages. The operator is required to make additional hand movements over and above the necessary operation of pipetting a sample from one container to another, thus increasing fatigue and reducing throughput. The number of tips the user can access at any one time is limited by the number of racks that can be placed within arms reach. For very small volume devices, it is difficult for the user to align the pipettor with the new tip. As a result, pipettors for volumes of 2 microlitres or less are typically single channel devices.

Robotic liquid handling systems using disposable pipette tips have similar drawbacks. The speed of the cartesian robot or other automated device is limited by the need to accelerate, move and stop heavy mechanical systems from tip rack to sample and then to waste. The number of liquid handling steps that can be performed in a single batch is limited by the number of tip racks that can be placed within reach of the robot. The precisional accuracy required to align sub-microlitre pipette tips has precluded the use of such devices in large arrays. Another disadvantage is the cost of the racks used to support the tips.

An alternative approach is the use of non-disposable devices, singly or in arrays. Examples of single hand-held devices are the precision syringes for low volume liquid handling manufactured by Hamilton and SGE. The barrel is typically made of glass and the syringe is made of metal, sometimes with a plastic or elastomeric piston seal. Being precision devices made of expensive materials these syringes are too expensive to be disposable. Several manufacturers, most notably Robbins Scientific (Sunnyvale, California, USA) and Tomtec (Hamden, Connecticut, USA) manufacture liquid handling systems with 96 or 384 such syringes in a common array. Non-disposable liquid handling devices have the benefit that it is not necessary to pick up and dispose of tips, however this advantage is to a large part negated by the need to wash the syringes between additions to avoid cross-contamination between samples. The need to perform this wash step means that liquid handling systems that use non-disposable syringes have throughputs that are generally comparable to systems using disposable tips, and can be slower if several washes are required. The choice between disposable tips and re-usable syringes is usually made on economic grounds or on the absolute requirement to eliminate cross-contamination. Re-usable syringes are perceived to be cheaper to run than disposable tips. Current disposable tips are expensive because of the need to provide these in a rack. When considering the true running cost of systems using non-disposable syringes it is important to take account of the cost of buying and disposing of the washing solvent and the cost of frequently replacing the syringe seals. In some cases, particularly in DNA amplification, it is necessary to guarantee zero cross-contamination even to the single molecule level. This can never be guaranteed with any system that relies on washing between transfers.

A common drawback with all currently existing multi-channel parallel pipetting systems is that each pipette cannot be individually addressed. Thus it is not possible when using, for example, a 96-pipettor array to add a reagent to all 96 wells of a microplate and then to add a second reagent to a chosen sub-set of the 96 wells with the same pipettor array. Even if the pistons in a 96 syringe array could be driven independently, it would still be necessary to immerse all 96 needles in the plate from which a sample was being transferred, thus leading to the possibility of wastage or carry-over.

The present invention provides a liquid handling system in which the pipettes may be disposable or re-usable and where the requirement to pick tips from a rack is eliminated. Furthermore, the present invention offers a means of high-speed sample transfer in a system that has full addressability for the pipette array. The system is compatible with low cost disposable devices.

According to the invention there is provided a strip of sampling devices comprising:
a strip of flexible material
an array of sampling devices joined to the strip to form a bandolier.

The flexible strip may have sprocket holes to drive and align the sampling devices. The devices may be of a positive displacement type having a barrel and piston, or may be of an air displacement type having a barrel (typically a cylindrical capillary or conical plastic tip) open at both ends or may be a sampling pin. It may be arranged so that all of the devices are held in the same plane and a hinged region is provided at each device to allow single or multiple devices to be hinged away from the general plane of the strip and thus be made available selectively.

The strip may be constructed of any suitable single or combination of materials such as plastic, paper or metal. The sampling device may be constructed of any suitable single or combination of materials such as plastics material, elastomer, metal, glass or ceramic. Alternatively, the sampling device and strip may be of unitary construction in a single material (preferably plastics material).

According to the present invention, there is also provided a method of substance sampling and dispensing, the method comprising the steps of:
feeding a strip, on which sampling devices are mounted, from a supply reel to an aspirate/dispense head;
positioning one or more of the sampling devices ready for sampling;
taking a sample;
dispensing the sample; and
feeding the used sampling device to a waste container.

The method may be performed with two or more aspirate/dispense heads at one time.

Plural aspirate/dispense heads may be used in sequence so that multiple aspirations and multiple dispenses may be supported.

According to the present invention, there is further provided a substance sampling and dispensing system comprising:
an aspirate/dispense head;
a supply reel for feeding to the aspirate/dispense head a continuous strip on which one or more sampling devices are mounted; and
positioning means for positioning the one or more sampling devices ready for sampling individually or in parallel.

The system may comprise a reel or stuffing box to accept used sampling devices.

The system may comprise further aspirate/dispense heads for receiving the strip prior to dispensing a sample.

The invention has particular benefits. A prior art pipetting apparatus will typically pick a pipette tip from a rack of tips, perform an aspiration at one location and dispense liquid to another before ejecting the tip to take a fresh one. The tips are located in different positions in a rack, typically 96 at a time. The robot has to be programmed for each tip position and the tips must be accurately positioned. This is difficult and problems can be experienced in tip pick and drop. The number of tips that can be accessed by the robot is limited to the number which can be accommodated in the area within the robots reach. The speed of pipetting is limited by the distance that the robot has to travel, the need for positional accuracy and the need to accelerate and stop a heavy robot.

The method and apparatus of the present invention solves these problems. The sampling apparatus can be fed continuously with fresh sampling devices from a remote reel. A fresh sampling device is fed automatically to an aspirate/ dispense head and is positioned to take a sample. The sampling device strip is always in contact with the robotic system, eliminating alignment problems. The need to travel to a tip rack position is eliminated, as is the capacity limitation dictated by the apparatus operating envelope. As the sampling device strip has very low mass it can be accelerated, moved and stopped much faster than a robot leaving the aspirate and dispense heads having only to travel short distances.

Furthermore, the method of the invention may be applied across many actuators (aspiration and dispense) with the sampling device strip running between them. After the first aspiration, the full sampling device then leaves the aspirate head and travels to a dispense head where an aliquot of the sample is dispensed. The sampling device may then continue on to further dispense heads to dispense further aliquots, and then on to a waste reel. This process enables one-to-many and many-to-one reformatting at high speed.

This system provides the benefits listed above when operating the method of the invention. The system has the ability to select an array of any number of sampling devices from 1 to the maximum number of sampling devices the head can address which allows for the process of cherry picking'. Conventional multi-channel liquid handling systems present the whole array of sampling devices at once into the sample. It is therefore not possible with, for example a 384-way syringe array (of the Tomtec or Robbins Scientific type) to pick a single compound from a 384-well plate. This process is important in follow-up for drug discovery. The present invention allows for a single sampling device or any number of sampling devices to be 'selected' by moving it through 90 degrees from the plane of the strip, thus allowing individual samples to be taken.

One example of the present invention will now be described with reference to the accompanying drawings, in which:
Figure 1 shows an array of sampling devices joined to a backing strip;
Figure 2 is a perspective view of a number of sampling devices selectably addressed for use;
Figure 3 is a diagrammatic view of a two-head liquid handling system according to the invention; and
Figure 4 is a perspective view of the two-head liquid handling system of figure 3.

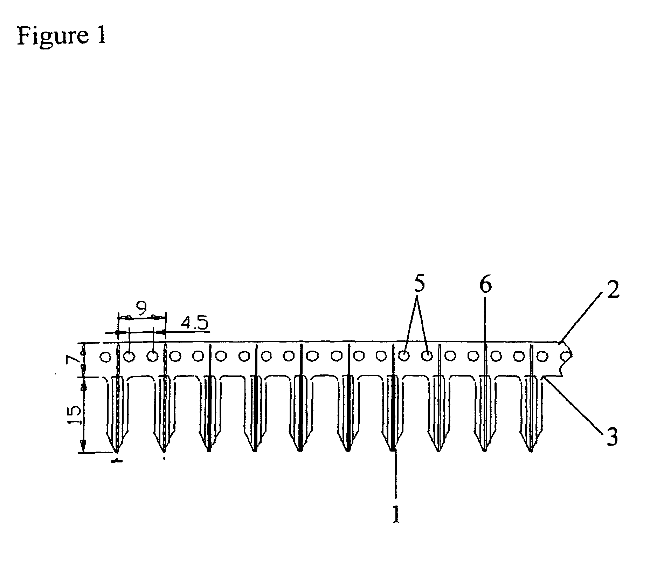

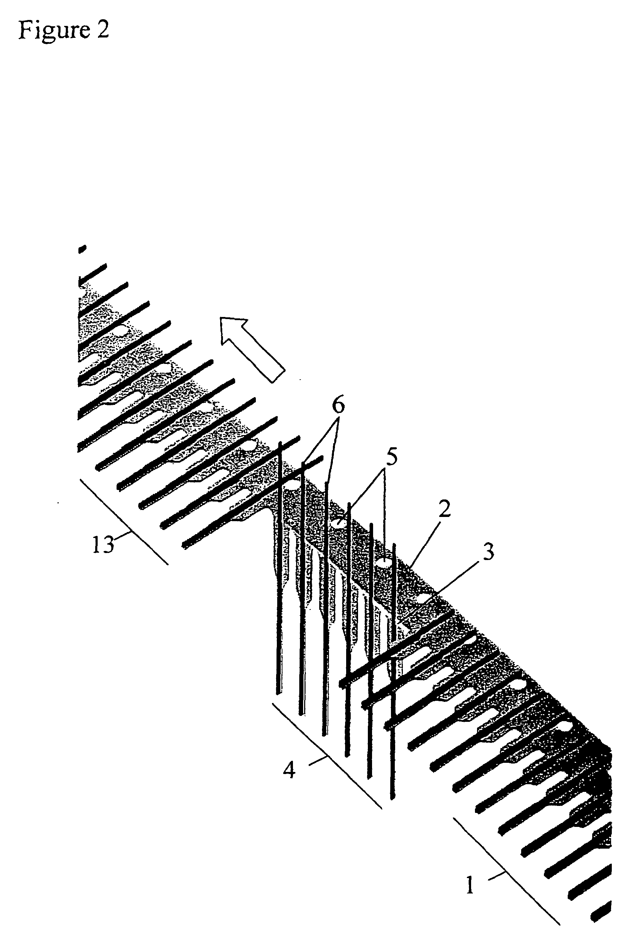

Referring to figure 1, an array of sampling devices 1 (in this case positive displacement pipettes) is joined to a backing strip 2 at a defined pitch (in this case 4.5 mm to match 384 and 1536-well plates). Sprocket holes 5 are provided to drive the tape. A hinge region 3 is incorporated into the backing strip 2 to allow each pipette 1 to be folded through ninety degrees to the plane of the backing strip. Figure 2 illustrates the benefit of this hinge region and motion. The strip is held flat above a target microplate. By rotating the pipette tips through ninety degrees about the hinge region 3 only the selected tips can access wells in the plate, and furthermore the rear of each pipette 6 is made more accessible to an actuator.

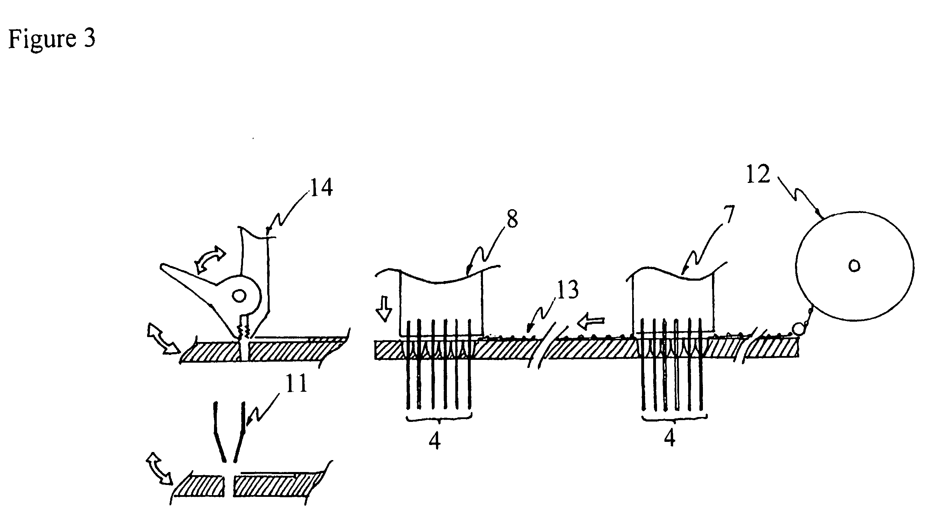

As shown in Figure 3, an actuator 14 can grip the back of the pistons 6 to operate the positive displacement pipette 1. Or, if the pipettes are of the air displacement type, an array of nozzles 11 may be brought down to mate with the rear of the pipettes 1.

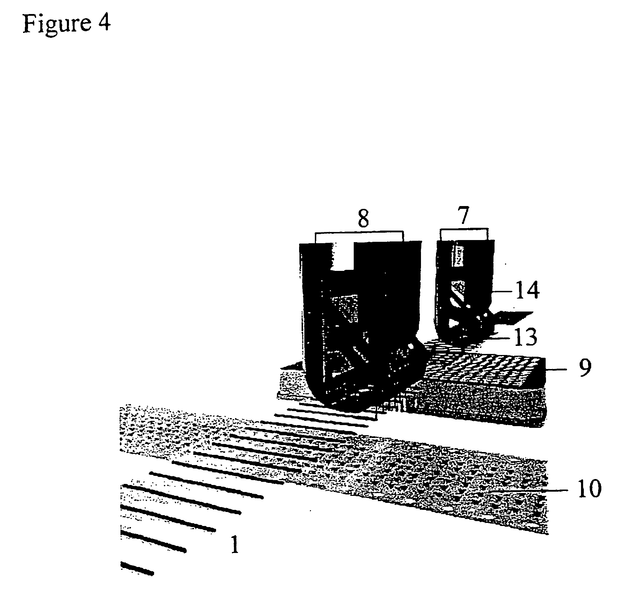

In this example, any number of pipettes 1 may be selected for operation. The pipettor heads 7,8 may be continuously supplied with pipettes 1 from a reel 12 some distance from the pipettor. A single pipettor head 7 may be used for both aspiration and dispense. In this case the invention gives the advantages of an essentially unlimited supply of pipette tips and the elimination of the need to travel to a location to pick or discard tips. Further benefits are obtained by using multiple pipettor heads 7,8. Figures 3 and 4 show two heads being used. A first head 7 selects pipettes and aspirates a liquid from wells in a microplate 9 into those pipettes. The filled pipettes 13 then travel on to the second head 8, which again selects the pipettes and then delivers part or all of their contents to a continuous tape of wells 10. This may alternatively be a microplate. In this way, the heavy mechanical components are only required to move up and down. The low mass pipettes travel at speed between the heads.

A sampling device tape with a continuous series of sampling devices on a 4.5-mm pitch can be used to access one row of 16 wells of a 384-well plate at once. By selecting alternate sampling devices, the same tape could access 8 wells of a 96-well plate (9mm pitch) and so on. This ability to temporarily orientate individual components is not a feature found in other systems using bandoliered components such as resistors, capacitors and bullets.

## Claims

1. A method of substance sampling and dispensing, the method comprising the steps of:
feeding a strip (2), on which sampling devices (1) are mounted, from a supply reel (12) to an aspirate/dispense head;
positioning one or more of the sampling devices ready for sampling;
taking a sample;
dispensing the sample; and
feeding the used sampling device to a waste container.

2. A method according to claim 1, performed by two or more aspirate/dispense heads (7,8) such that sampling devices (1) aspirate samples at one head (7) and then travel to a subsequent head (7,8) to perform further aspiration or dispensing.

3. An array of sampling devices (1) comprising:
a strip (2) of flexible material
an array of sampling devices joined to the strip to form a bandolier.

4. An array according to claim 3, wherein a hinge region (3) is incorporated in the strip (2) to allow some or all of the sampling devices to be folded away from the plane of the strip or other sampling devices on the strip.

5. An array according to any of the preceding claims 3 or 4, wherein sprocket holes (5) are incorporated in the strip (2) to facilitate drive and indexing of the strip.

6. An array according to any of claims 3 to 5, wherein the body of each sampling device (1) is used as a gear track to facilitate drive and indexing of the strip (2).

7. An array according to any of claims 3 to 6 wherein the sampling devices (1) are positive displacement pipettes.

8. An array according to any of claims 3 to 6, wherein the sampling devices (1) are air displacement pipette tips.

9. An array according to any of claims 3 to 6, wherein the sampling devices (1) are capillaries.

10. An array according to any of claims 3 to 6, wherein the sampling devices (1) are sampling pins.

11. A substance sampling and dispensing system comprising:
an aspirate/dispense head;
an array according to any of claims 3 to 10; and
positioning means for positioning the one or more sampling devices ready for sampling individually or in parallel.

12. A system according to claim 11, further comprising an actuator to fold, in use sampling devices (1) away from the plane of the strip (2) or other sampling devices on the strip.

13. A system according to claim 11 or 12, further comprising an actuator for selecting, in use one or more sampling devices (1) at will from the array.

14. A system according to any of claims 11 to 13, further comprising at least one more actuator (7,8,11,13) to aspirate or dispense samples from the same sampling devices (1).

15. A system according to any of claims 11 to 14, wherein the strip (2) of sampling devices (1) is fed from a reel (12) or fan-fold box.

16. A system according to any of claims 11 to 15, wherein the strip (2) of used sampling devices (1) are fed to a waste container or reel.

## Revendications

1. Procédé d'échantillonnage et de distribution de substance, le procédé comprenant les étapes de :
amener une bande (2) sur laquelle des dispositifs d'échantillonnage (1) sont montés depuis une bobine d'alimentation (12) à une tête d'aspiration/distribution ;
positionner un ou plusieurs des dispositifs d'échantillonnage prêts pour l'échantillonnage ;
prélever un échantillon ;
distribuer l'échantillon ; et
amener le dispositif d'échantillonnage utilisé à un récipient de déchets.

2. Procédé selon la revendication 1, réalisé par deux ou plusieurs têtes d'aspiration/distribution (7, 8) de sorte que les dispositifs d'échantillonnage (1) aspirent les échantillons à une tête (7) et les déplacent ensuite à une tête subséquente (7, 8) pour réaliser une autre aspiration ou distribution.

3. Ensemble de dispositifs d'échantillonnage (1) comprenant :
une bande (2) de matériau flexible
un réseau de dispositifs d'échantillonnage réunis à la bande pour former un bandolier.

4. Ensemble selon la revendication 3, dans lequel une région d'articulation (3) est incorporée dans la bande (2) pour permettre à une partie ou à tous les dispositifs d'échantillonnage d'être repliés à partir du plan de la bande ou d'autres dispositifs d'échantillonnage sur la bande.

5. Ensemble selon l'une quelconque des revendications précédentes 3 ou 4, dans lequel des trous dentés (5) sont incorporés dans la bande (2) pour faciliter l'entraînement et l'indexation de la bande.

6. Ensemble selon l'une quelconque des revendications 3 à 5, dans lequel le corps de chaque dispositif d'échantillonnage (1) est utilisé comme une piste pour faciliter l'entraînement et l'indexation de la bande (2).

7. Ensemble selon l'une quelconque des revendications 3 à 6, dans lequel les dispositifs d'échantillonnage (1) sont des pipettes à déplacement positif.

8. Ensemble selon l'une quelconque des revendications 3 à 6, dans lequel les dispositifs d'échantillonnage (1) sont des extrémités de pipette à déplacement par air.

9. Ensemble selon l'une quelconque des revendications 3 à 6, dans lequel les dispositifs d'échantillonnage (1) sont des capillaires.

10. Ensemble selon l'une quelconque des revendications 3 à 6, dans lequel les dispositifs d'échantillonnage (1) sont des aiguilles d'échantillonnage.

11. Système de distribution et d'échantillonnage de substance comprenant :
une tête d'aspiration/distribution ;
un ensemble selon l'une quelconque des revendications 3 à 10 ; et
un moyen de positionnement pour positionner un ou plusieurs dispositifs d'échantillonnage prêts pour l'échantillonnage de façon individuelle ou en parallèle.

12. Système selon la revendication 11 comprenant, en outre, un dispositif d'actionnement pour replier, lors de l'utilisation, des dispositifs d'échantillonnage (1) à distance du plan de la bande (2) ou d'autres dispositifs d'échantillonnage sur la bande.

13. Système selon la revendication 11 ou 12 comprenant, en outre, un dispositif d'actionnement pour sélectionner, lors de l'utilisation, un ou plusieurs dispositifs d'échantillonnage (1) à volonté à partir de l'ensemble.

14. Système selon l'une quelconque des revendications 11 à 13 comprenant, en outre, au moins un ou plusieurs dispositifs d'actionnement (7, 8, 11, 13) pour aspirer ou distribuer des échantillons à partir des mêmes dispositifs d'échantillonnage (1).

15. Système selon l'une quelconque des revendications 11 à 14, dans lequel la bande (2) des dispositifs d'échantillonnage (1) est amenée à partir d'une bobine (12) ou d'un dispositif de repliement.

16. Système selon l'une quelconque des revendications 11 à 15, dans lequel la bande (2) des dispositifs d'échantillonnage utilisés (1) est amenée à un récipient de déchets ou bobine.

## Patentansprüche

1. Verfahren zum Probennehmen und Ausgeben einer Substanz, wobei das Verfahren die Schritte umfaßt:
Zuführen eines Streifens (2), auf welchem Proben- bzw. Probennahmevorrichtungen (1) montiert bzw. angeordnet sind, von einer Zufuhrrolle bzw. -spule (12) zu einem Ansaug/Ausgabekopf;
Positionieren von einer oder mehreren der Probennahmevorrichtungen, bereit für eine Probennahme;
Entnehmen einer Probe;
Abgeben bzw. Ausgeben der Probe; und
Zuführen der verwendeten Probennahmevorrichtung zu einem Abfallbehälter.

2. Verfahren nach Anspruch 1, durchgeführt durch zwei oder mehr Ansaug/Ausgabeköpfe (7, 8), so daß Probennahmevorrichtungen (1) Proben an einem Kopf (7) ansaugen und sich dann zu einem nachfolgenden Kopf (7, 8) bewegen, um eine weitere Ansaugung oder ein Ausgeben durchzuführen.

3. Anordnung bzw. Feld von Probennahmevorrichtungen (1), umfassend:
einen Streifen (2) aus flexiblem Material,
eine Anordnung bzw. ein Feld von Probennahmevorrichtungen, welche mit dem Streifen verbunden sind, um ein Bandolier bzw. einen Gurt zu bilden.

4. Anordnung nach Anspruch 3, wobei ein Gelenkbereich bzw. eine Gelenkregion (3) in dem Streifen (2) aufgenommen ist, um einigen oder allen der Probennahmevorrichtungen zu erlauben, weg von der Ebene des Streifens oder von anderen Probennahmevorrichtungen auf dem Streifen gefaltet zu werden.

5. Anordnung nach einem der vorangehenden Ansprüche 3 oder 4, wobei Zahnradlöcher (5) in dem Streifen (2) aufgenommen sind, um einen Antrieb oder Indexieren bzw. schrittweises Bewegen des Streifens zu erleichtern.

6. Anordnung nach einem der Ansprüche 3 bis 5, wobei der Körper von jeder Probennahmevorrichtung (1) als eine Ritzelspur verwendet wird, um einen Antrieb und ein Indexieren bzw. schrittweises Bewegen des Streifens (2) zu erleichtern.

7. Anordnung nach einem der Ansprüche 3 bis 6, wobei die Probennahmevorrichtungen (1) Pipetten mit einer positiven Verschiebung bzw. Verlagerung sind.

8. Anordnung nach einem der Ansprüche 3 bis 6, wobei die Probennahmevorrichtungen (1) Luftvenagerungs-Pipettenspitzen sind.

9. Anordnung nach einem der Ansprüche 3 bis 6, wobei die Probennahmevorrichtungen (1) Kapillaren sind.

10. Anordnung nach einem der Ansprüche 3 bis 6, wobei die Probennahmevorrichtungen (1) Probennahmenstifte sind.

11. System zum Probennehmen und Ausgeben einer Substanz, umfassend:
einen Ansaug/Ausgabekopf;
eine Anordnung gemäß einem der Ansprüche 3 bis 10; und
Positioniermittel zum Positionieren der einen oder mehreren Probennahmevorrichtung(en), welche für ein individuelles oder paralleles Probennehmen bereit ist bzw. sind.

12. System nach Anspruch 11, weiters umfassend eine Betätigungseinrichtung bzw. ein Stellglied, um in der Verwendung Probennahmevorrichtungen (1) weg von der Ebene des Streifens (2) oder von anderen Probennahmevorrichtungen auf dem Streifen zu falten.

13. System nach Anspruch 11 oder 12, weiters umfassend eine Betätigungseinrichtung für ein willkürliches Auswählen von einer oder mehreren Probennahmevorrichtung(en) (1) aus der Anordnung.

14. System nach einem der Ansprüche 11 bis 13, weiters umfassend wenigstens ein weiteres Stellglied (7, 8, 11, 13), um Proben aus den Probennahmevorrichtungen (1) anzusaugen oder auszugeben.

15. System nach einem der Ansprüche 11 bis 14, wobei der Streifen (2) von Probennahmevorrichtungen (1) von einer Rolle bzw. Spule (12) oder einem Behälter mit Leporello-Einlage zugeführt ist.

16. System nach einem der Ansprüche 11 bis 15, wobei der Streifen (2) von verwendeten Probennahmevorrichtungen (1) einen Abfallbehälter oder einer Spule zugeführt ist.
